# EUROPEAN PATENT APPLICATION

(11) **EP 2 192 149 A1**
(43) Date of publication of application: **02.06.2010**
(21) Application number: 08831556.9
(22) Date of filing: 11.09.2008
(51) Int. Cl.: C08J 9/10

(54) **FOAMING COMPOSITION FOR FILLING, FOAMING MEMBER FOR FILLING, AND FOAM FOR FILLING**

(30) Priority: 20.09.2007 JP 2007244394; 10.09.2008 JP 2008231947
(71) Applicant: Nitto Denko Corporation, Ibaraki-shi, Osaka 567-8680 (JP)
(72) Inventor: UI, Takehiro, Ibaraki-shi Osaka 567-8680 (JP)
(74) Representative: Schwabe - Sandmair - Marx
(86) International application number: PCT/JP2008/066424
(87) International publication number: WO 2009/038015

(57) **Abstract**

A filling foam composition contains a polymer, azodicarbonamide having an average particle size of 10 µm or less, and a zinc compound.

## Description

### TECHNICAL FIELD

The present invention relates to a filling foam used for filling a gap between various members and an interior space of hollow members, and a foam filling member and a filling foam composition, which are used for forming the filling foam.

### BACKGROUND ART

It has been conventionally known to fill foam as a filler in a hollow member formed as a closed cross section of an automotive pillar or the like for the purpose of preventing the vibration and noise of an engine or wind noise from being transmitted into the vehicle interior.
There has been proposed that, for example, a filling foam composition which is made of ethylene-vinyl acetate copolymer, azodicarbonamide, and urea compound is prepared, and the composition thus prepared is heated to foam (see, for example, the following Patent Document 1). In the filling foam composition, azodicarbonamide (VINIFOR AC-LQ available from EIWA CHEMICAL IND. CO., LTD.) having an average particle size of 20 µm is used.
Patent Document 1: Japanese Unexamined Patent Publication No. 2005-97586

### DISCLOSURE OF THE INVENTION

### PROBLEMS TO BE SOLVED

However, in the case where the filling foam composition of Patent Document 1 after preparation is stored at high temperature and high humidity over a long period of time and then foamed, excellent storage stability cannot be ensured, resulting in a poor foaming ratio (volume expansion ratio).
It is an object of the present invention to provide a filling foam composition capable of ensuring good storage stability at high temperature and high humidity, a foam filling member using the filling foam composition, and a filling foam obtained by foaming the filling foam composition.

### MEANS FOR SOLVING THE PROBLEM

To achieve the above object, the filling foam composition of the present invention contains a polymer; azodicarbonamide having an average particle size of 10 µm or less; and a zinc compound.
Further, it is preferable that the filling foam composition of the present invention further contains an organic peroxide.

Still further, in the filling foam composition of the present invention, it is preferable that the zinc compound is a fatty acid zinc formed of a fatty acid anion having 12 or more carbon atoms and a zinc cation.
Yet further, the foam filling member of the present invention includes a filling foam composition containing a polymer, azodicarbonamide having an average particle size of 10 µm or less, and a zinc compound; and a mounting member being mounted to the filling foam composition and attachable in an interior space of a hollow member.

Yet still further, the filling foam of the present invention is obtained by foaming a filling foam composition containing a polymer, azodicarbonamide having an average particle size of 10 µm or less, and a zinc compound.

### EFFECT OF THE INVENTION

The filling foam composition of the present invention contains azodicarbonamide having a specific average particle size or less and a zinc compound, so that it can ensure good storage stability at high temperature and high humidity. Thus, even after long-term storage under high temperature and high humidity conditions, the filling foam composition can prevent reduction of the volume expansion ratio.
Thus, the filling foam composition and the foam filling member of the present invention can fill a gap between members or an interior space of a hollow member with a filling foam with less reduction of the volume expansion ratio, without leaving any space.

### BRIEF DESCRIPTION OF THE DRAWINGS

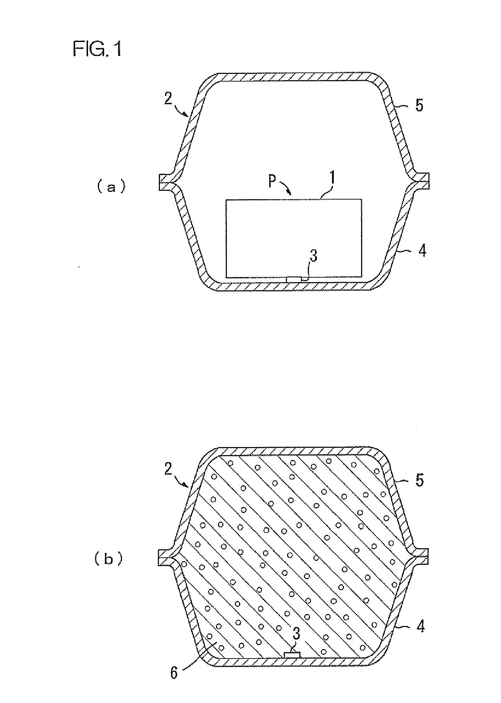

[FIG.1] FIG. 1 is a process drawing showing an embodiment of a method for filling an interior space of a pillar of a vehicle using a filling foam composition, a foam filling member, and a filing foam of the present invention, (a) showing a process of mounting a mounting member to the filling foam composition to produce the foam filling member, and placing the foam filling member in the pillar, and (b) showing a process of foaming, crosslinking, and curing the filling foam composition by heating, thereby filling the interior space of the pillar with the resulting filling foam.

### EMBODIMENT OF THE INVENTION

The filling foam composition of the present invention contains a polymer, azodicarbonamide, and a zinc compound.
In the present invention, the polymer is not particularly limited, and a known polymer is used. Examples of the polymer include resins such as ethylene-vinyl acetate copolymer (EVA), ethylene ethyl acrylate copolymer (EEA), ethylene butyl acrylate copolymer (EBA), olefin resin (e.g., polyethylene, polypropylene, etc.), polyester, polyvinyl butyral, polyvinyl chloride, polyamide, and polyketone; and rubber such as styrene-butadiene rubber (SBR), polybutadiene rubber (BR), and ethylenepropylenediene rubber (EPDM). These polymers can be used alone or in combination of two or more kinds.

Preferably, EVA, EEA, and EBA are used as the polymer.
EVA is a copolymer of ethylene and vinyl acetate, and has a vinyl acetate content (VA content) in the range of, for example, 10 to 46% by weight, and a melt flow rate (MFR: in accordance with JIS K6730) in the range of, for example, 1 to 3.5 g/10 min.
EEA is a copolymer of ethylene and ethyl acrylate, having a ethyl acrylate content (EA content, MDP method) in the range of, for example, 16 to 35% by mass, and a melt flow rate (MFR: in accordance with JIS K7210 (1999)) in the range of, for example, 2 to 8 g/10min.

EBA is a copolymer of ethylene and butyl acrylate, and has a butyl acrylate content (BA content, MDP method) in the range of, for example, 10 to 30% by mass, and a melt flow rate (MFR: in accordance with JIS K7210 (1999)) in the range of, for example, 1 to 6 g/10 min.
Azodicarbonamide (ADCA) serves as a foaming agent for foaming the polymer.

The use of azodicarbonamide can sufficiently increase an amount of gas evolved upon foaming, so that a filling foam composition having excellent foamability can be obtained. More specifically, the amount of gas evolved from azodicarbonamide is 270 ml/g, achieving high foaming as compared with other foaming agents such as 4,4'-oxybis(benzenesulphonylhydrazide) (OBSH) which can evolve 120 ml/g of gas.
Therefore, azodicarbonamide is highly cost effective.

Further, an average particle size of azodicarbonamide, more specifically, an average particle size of azodicarbonamide measured by a laser diffraction/scattering particle size distribution analyzer is 10 µm or less, or preferably, 8 µm or less, and usually 3 µm or more.
The laser diffraction/scattering particle size distribution analyzer, specifically, LA-910W (trade name, manufactured by Horiba, Ltd.) or the like is used, and the average particle size is measured at room temperature by such laser diffraction/scattering particle size distribution analyzer.

When the average particle size of the azodicarbonamide exceeds the above range, high-temperature and high-humidity storage of the filling foam composition thus obtained can increase the probability of contact between the azodicarbonamide and water absorbed in the filling foam composition, and after long-term storage under such atmosphere, the volume expansion ratio (hereinafter simply referred to as "foaming ratio" in some cases) is significantly reduced, which may in turn deteriorate the storage stability. Thus, filling of a gap between members or an interior space of a hollow member becomes insufficient. It should be noted that OBSH can prevent reduction of the foaming ratio after such long-term storage, but can cause disadvantage in cost as compared with the azodicarbonamide as described above.

The mixing proportion of the azodicarbonamide is not particularly limited, and the azodicarbonamide is mixed in the range of, for example, 5 to 30 parts by weight, or preferably 10 to 25 parts by weight, per 100 parts by weight of the polymer. When the mixing proportion of the azodicarbonamide is less than the above range, the obtained filling foam composition is low foaming. In order to fill a gap between members or an interior space of a hollow member, it is necessary to form the foam filling member obtained from the filling foam composition in a large shape, so that workability of mounting work may be impaired. Conversely, when the mixing proportion of the azodicarbonamide exceeds the above range, the foaming ratio corresponding to the mixing proportion cannot be obtained, which may cause disadvantage in cost.

The zinc compound functions as a foaming auxiliary agent, and examples thereof include zinc oxide and fatty acid zinc.
Among them, zinc oxide is preferable from the viewpoint of low hygroscopicity.
In contrast, fatty acid zinc is preferable from the viewpoint of a foaming temperature to be described later.
The fatty acid zinc is a salt of a fatty acid anion (RCOO⁻: R represents a long chain alkyl group or a long chain alkenyl group.) and a zinc cation (Zn²⁺).

The number of carbon atoms of the fatty acid anion is, for example, 12 or more and 18 or less, and specific examples of the fatty acid anion include, anions of saturated fatty acids such as lauric acid (C₁₁H₂₃COOH), myristic acid (C₁₃H₂₇COOH), and stearic acid (C₁₇H₃₅COOH); and anions of unsaturated fatty acids such as oleic acid (C₁₇H₃₃COOH).
Specific examples of the fatty acid zinc include saturated fatty acid zinc formed of saturated fatty acid anion having 12 or more and 18 or less carbon atoms and zinc cation, such as zinc laurate (Zn(C₁₁H₂₃COO₂) (of total 24 carbon atoms), zinc myristate (Zn(C₁₃H₂₇COO)₂) (of total 28 carbon atoms), zinc stearate (Zn(C₁₇H₃₅COO)₂) (of 36 carbon atoms); and unsaturated fatty acid zinc formed of unsaturated fatty acid anion having 12 or more and 18 or less carbon atoms and zinc cation, such as zinc oleate (Zn(C₁₇H₃₃COO)₂) (of total 36 carbon atoms). Among them, saturated fatty acid zinc is preferable.

The zinc compound is contained as a foaming auxiliary agent in the filling foam composition, whereby the filling foam composition can achieve excellent storage stability, and the foaming temperature of azodicarbonamide can also be set to a temperature during coating of a vehicle to be described later (e.g., 140°C or more and 180°C or less, or preferably 160°C or more and 180°C or less).
In particular, when the zinc compound is a fatty acid zinc, the foam filling member can be sufficiently foamed at a relatively low temperature (e.g., 140°C or more and less than 160°C, specifically 150°C).

The zinc compound is mixed in the range of, for example, 1 to 20 parts by weight, or preferably 2 to 10 parts by weight, per 100 parts by weight of the polymer.
In the present invention, an organic peroxide is preferably mixed in the filling foam composition.
The organic peroxide serves as a crosslinking agent for crosslinking a polymer, and, for example, as a radical generator capable of crosslinking a polymer by decomposing the organic peroxide by heating to generate a free radical. Examples of the organic peroxide include dicumyl peroxide (DCP), 1,1-ditertiaryhutylperoxy-3,3,5-trimethylcyclohexane, 2,5-dimethyl-2,5-ditertiarybutylperoxyhexane, 1,3-bis(tertiarybutylperoxyisopropyl)benzene, tertiarybutylperoxyketone, and tertiarybutylperoxy benzoate. Among them, DCP is preferable.

These organic peroxides can be used alone or in combination of two or more kinds.
The mixing proportion of the organic peroxide is not particularly limited, and the organic peroxide is mixed in the range of, for example, 0.1 to 10 parts by weight, or preferably 0.5 to 5 parts by weight, per 100 parts by weight of the polymer. When the mixing proportion of the organic peroxide is less than the above range, the viscosity is poorly increased by crosslinking, and thus gas pressure during foaming may break foams. Conversely, when the mixing proportion of the organic peroxide exceeds the above range, excessive crosslinking occurs, so that the polymer coating suppresses the gas pressure during foaming, which may cause poor foaming with a high foaming ratio.

In the present invention, there can be appropriately mixed other foaming agents (e.g., sulfonylhydrazide compound such as OBSH, azo compounds other than ADCA, such as azobis(isobutyronitrile)); other foaming auxiliary agents (e.g., urea compound; higher fatty acid such as salicylic acid and stearic acid, or a metal salt thereof (except zinc compounds)); and known additives such as cross-linking accelerator, processing aid, basic oxide, stabilizer, plasticizer, antiaging agent, antioxidant, pigment, coloring agent, mildewproofing agent, and flame retardant as long as an advantageous effect of the present invention is not prevented.

The filling foam composition of the present invention is prepared by blending each of the above-mentioned components in the above-mentioned mixing proportion, and uniformly mixed. The filling foam composition can be prepared by kneading the above-mentioned components with, for example, a mixing roll, a pressure kneader, or an extruder.
In the preparation, the resulting kneaded composition is prepared so as to have a flow tester viscosity (120°C, load of 40 kg) in the range of 1 x 10³ to 1 x 10⁵ Pa·s, or preferably 3 x 10³ to 3 x 10⁴ Pa·s. The kneaded composition can be foamed with a proper foaming ratio by setting the viscosity of the kneaded composition in such range.

Furthermore, in the present preparation, the resulting kneaded composition can be prepared as a preform by molding the composition into a predetermined shape.
The molding method of the kneaded composition is not particularly limited, and, for example, the kneaded composition is molded by pelletizing it using a pelletizer and molding the resulting pellets into a predetermined shape under the temperature conditions (e.g., 90 to 120°C) where less decomposition of the azodicarbonamide occurs using an injection molding machine or an extruder, or directly molded into a predetermined shape by calendaring or press molding.

The filling foam of the present invention can be formed by foaming, crosslinking, and curing through heating the resulting filling foam composition of the present invention under appropriate conditions.
The resulting filling foam of the present invention has a density (weight of foam (g)/volume of foam (cm³)) of, for example, 0.04 to 0.2 g/cm³, or preferably 0.05 to 0.08 g/cm³, and a volume expansion ratio upon foaming (density before foaming/density after foaming) of, for example, 10 times or more, or preferably 10 to 40 times. When the volume expansion ratio attains to the above range, a gap between members or an interior space of a hollow member can be filled (sealed) with the filling foam without leaving any space even if the gap or the internal space has a complicated shape.

After subjected to high-temperature and high-humidity (e.g., 60°C, 90%RH) storage for a long period of time (e.g., for 10 days), the resulting filling foam of the present invention has a volume expansion ratio of, for example, 80% or more, or preferably 80 to 115% as compared with the volume expansion ratio immediately after the preparation.
Thus, the resulting filling foam of the present invention gives various effects such as reinforcement, vibration suppression, sound insulation, dust control, heat insulation, buffering, and water tight for various members, and it can be preferably used as a filling material for various industrial products such as reinforcing materials, vibration proof materials, sound insulation materials, dust control materials, heat insulators, buffers, and water proof materials, which are filled in a gap between various members or an interior space of a hollow member.

The method for filling a gap between various members or an interior space of a hollow member is not particularly limited, and, for example, the following method may be used, such as, a filling foam composition is placed between members for filling a gap, or in an interior space of a hollow member, the placed filling foam composition is then heated to be foamed, crosslinked, and cured, so that a filling foam is formed. With this filling foam, the gap between members or the interior space of the hollow member may be filled.

More specifically, for example, for filling of an interior space of a hollow member, first, a mounting member is mounted to a filling foam composition to produce a foam filling member, and the mounting member of the foam filling member is then mounted in the interior space of the hollow member. Thereafter, the foam filling member is foamed by heating to form a filling foam, so that the interior space of the hollow member can be filled with the filling foam.
Examples of such hollow member can include a pillar of a vehicle. With the filling foam composition of the present invention, a foam filling member is produced and is then mounted in an interior space of the pillar. Thereafter, the foam filling member thus mounted is foamed to form a filling foam, which can effectively prevent vibration and noise of an engine or wind noise from being transmitted into the vehicle interior of an automobile while providing sufficient reinforcement of the pillar.

Next, as an example of the embodiment of the filling foam composition, the foam filling member, and the filling foam of the present invention, a method for filling an interior space of a pillar of a vehicle will be described below.
In this method, first, as shown in FIG. 1(a), a filling foam composition 1 molded into a predetermined shape is placed in a pillar 2. In order to place the filling foam composition 1 in the pillar 2, for example, a mounting member 3 is attached to the filling foam composition 1 to produce a foam filling member P, and the mounting member 3 of the foam filling member P is attached to the inner surface of the pillar 2. In order to attach the mounting member 3 to the filling foam composition 1, for example, the mounting member 3 is insert-molded together with a kneaded composition during the molding of the filling foam composition 1, other than the method to attach the mounting member 3 to the molded filling foam composition 1. In addition, in order to attach the mounting member 3 to the inner surface of the pillar 2, for example, the mounting member 3 is locked by forming a locking groove in the inner surface of the pillar 2, and then inserting the mounting member 3 therein, or fixed by adsorption or magnetic force by constituting the mounting member 3 with an adhesive disc or a magnet. As a further alternative, the mounting member 3 is attached by welding by constituting the mounting member 3 with a metal plate.

The pillar 2 is composed of an inner panel 4 and an outer panel 5 both having a generally concave shape in cross section. First, the filling foam composition 1 is placed on the inner panel 4, and both end portions of the inner panel 4 and both end portions of the outer panel 5 are then abutted against each other in opposed relation. These abutted panels are connected by welding to form a closed cross section. More specifically, such pillar 2 is used as a front pillar, a side pillar, or a rear pillar of a vehicle body.

Thereafter, in this method, using the heat in the drying line process during subsequent baking finish, the pillar 2 is heated at a temperature of, for example, 140°C or more and 180°C or less, or preferably 160°C or more and 180°C or less. Such heating allows formation of a filling foam 6 by foaming, crosslinking, and curing the filling foam composition 1, and the interior space of the pillar 2 can be filled with the filling foam 6 without leaving any space.

The shape, placement position, disposition orientation, number of disposition and the like of the filling foam composition 1 are appropriately selected according to the shape of the pillar 2.
Such filling foam composition 1 contains azodicarbonamide having a specific average particle size or less and a zinc compound, so that it can ensure good storage stability at high temperature and high humidity. Thus, even after long-term storage under high temperature and high humidity conditions, the filling foam composition can prevent reduction of the foaming ratio.

After the filling foam composition 1 is prepared, or the foam filling member P is produced using the filling foam composition 1, the prepared product may be subjected to long-term storage at high temperature and high humidity before used (filled) by a user. The filling foam composition 1 can ensure good storage stability at high temperature and high humidity after the preparation. Thus, even after long-term storage under high temperature and high humidity conditions, the filling foam composition 1 can prevent reduction of the foaming ratio, whereby a user can fill the interior space of the pillar 2 without leaving any space.

### EXAMPLES

While in the following, the present invention will be described in further detail with reference to Examples and Comparative Examples, the present invention is not limited to any of them.

### (Preparation of Filling Foam Composition)

According to the blending formulation shown in Table 1, filling foam compositions of Examples 1 to 7 and Comparative Examples 1 to 4 were prepared by kneading components of a polymer, a foaming agent (azodicarbonamide), a foaming auxiliary agent, and organic peroxide at a temperature of 110°C and a rotation speed of 15 min⁻¹ for 10 minutes using a 6-inch mixing roll. Subsequently, the kneaded mixture was press-molded with a hot press at 90°C to form into a 3 mm-thick sheet. Thereafter, the sheet was cut out into a size of 30 mm x 30 mm to obtain a test piece.

### (Evaluation of Filling Foam Composition)

### (1) Volume Expansion Ratio Immediately After Preparation

The test piece thus obtained was heated at 180°C (in Examples 1 to 7 and Comparative Examples 1 to 4) and 150°C (in Examples 4 to 7) each for 20 minutes to be foamed, and the volume expansion ratio of the foamed test piece was determined. The results are shown in Table 1.

### (2) Volume Expansion Ratio After Long-Term Storage at High Temperature/Humidity

The test piece thus obtained was stored at 60°C and 90%RH for 10 days. Thereafter, the test piece thus stored was foamed by heating at 180°C (in Examples 1 to 7 and Comparative Examples 1 to 4) and 150°C (in Examples 4 to 7) each for 20 minutes to be foamed, and the volume expansion ratio of the foamed test piece was determined. The results are shown in Table 1.

### [Table 1]

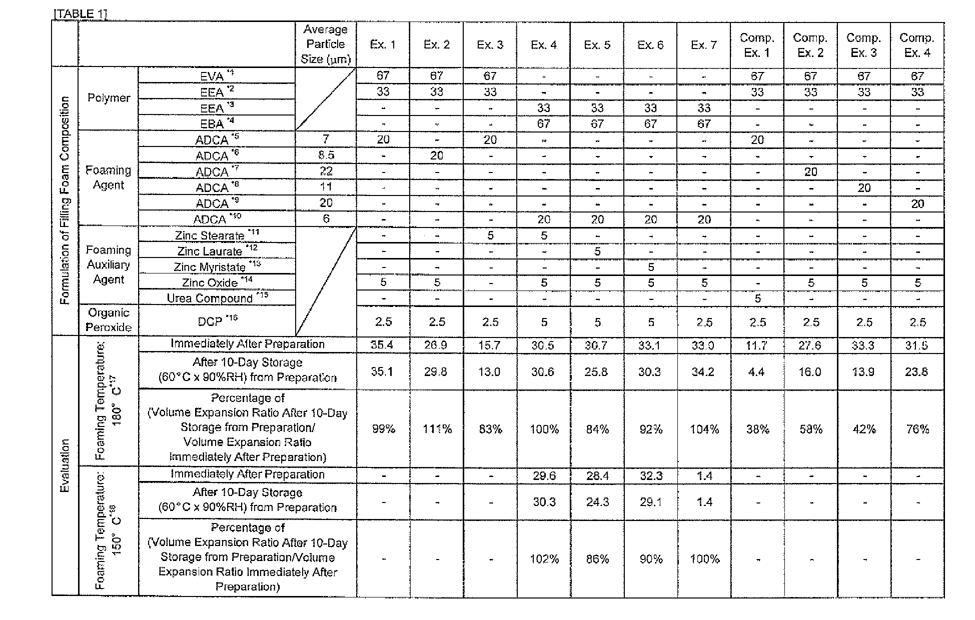

Numerical values in the columns of "Formulation of Filling Foam Composition" in Table 1 show the number of parts by weight of each component to be mixed. The volume expansion ratios in Table 1 are calculated using the equation, volume expansion ratio = density before foaming/density after foaming. Further, the abbreviations in Table 1 are shown below.
Eve*¹: Ethylene-vinyl acetate copolymer, available from Tosoh Corporation under the trade name of ULTRACEN 636 (MFR 2.5, VA content: 19%)
EEA*²: Ethylene ethyl acrylate copolymer, available from DU PONT-MITSUI POLYCHEMICALS CO., LTD. under the trade name of EVAFLEX EEA A-702 (MFR 5, EA content: 19%)
EEA*³: Ethylene ethyl acrylate copolymer, available from DU PONT-MITSUI POLYCHEMICALS CO., LTD. under the trade name of ELVALOY 2116AC (MFR 1, EA content: 16%)
EBA*⁴: Ethylene butyl acrylate copolymer, available from DU PONT-MITSUI POLYCHEMICALS CO., LTD. under the trade name of ELVALOY 3117AC (MFR 1.5, EB content: 17%)
ADCA*⁵ : Azodicarbonamide, available from Sankyo Kasei Co., Ltd. under the trade name of CELLMIC C-2, average particle size of 7 µm
ADCA*⁶ : Azodicarbonamide, available from EIWA CHEMICAL IND. CO., LTD. under the trade name of VINYFOR AC-3M, average particle size of 8.5 µm
ADCA*⁷ : Azodicarbonamide, available from Sankyo Kasei Co., Ltd. under the trade name of CELLMIC C-121, average particle size of 22 µm
ADCA*⁸ : Azodicarbonamide, available from Sankyo Kasei Co., Ltd. under the trade name of CELLMIC CE, average particle size of 11 µm
ADCA*⁹ : Azodicarbonamide, available from EIWA CHEMICAL IND. CO., LTD. under the trade name of VINYFOR AC-LQ, average particle size of 20 µm
ADCA*¹⁰ : Azodicarbonamide, available from EIWA CHEMICAL IND. CO., LTD. under the trade name of VINYFOR AC-1C, average particle size of 6 µm
Zinc stearate*¹¹: Available from Sakai Chemical Industry Co., Ltd. under the trade name of SZ-P
Zinc laurate*¹²: Available from Sakai Chemical Industry Co., Ltd. under the trade name of LZ-P
Zinc myristate*¹³: Available from NOF Corporation Co., Ltd. under the trade name of POWDER BASE M
Zinc oxide*¹⁴: Available from Mitsui Mining & Smelting Co., Ltd., second grade zinc oxide
Urea compound *¹⁵: Available from EIWA CHEMICAL IND. CO., LTD. under the trade name of CELLPASTE K5
DCP*¹⁶: Dicumyl peroxide, available from NOF Corporation Co., Ltd. under the trade name of PERCUMYL D-40MBK (DCP content: 40%, silica + EPDM content: 60%, 1-minute half-life temperature: 175°C)
Foaming temperature: 180°C*¹⁷, under the foaming conditions (temperature: 180°C, time: 20 minutes)
Foaming temperature: 150°C*¹⁸, under the foaming conditions (temperature: 150°C, time: 20 minutes)

### (Results)

Table 1 shows that in Examples 1 to 7 using ADCA having an average particle size of 10 µm or less, the filling foam composition can prevent reduction of the foaming ratio even after stored for 10 days at 60°C and 90%RH as compared with Comparative Examples 2 to 4 using ADCA having an average particle size of more than 10 µm.

Table 1 also shows that in Examples 4 to 7 using a fatty acid zinc as a foaming auxiliary agent, the filling foam composition can attain to a sufficient foaming ratio even if the foaming temperature is changed from 180°C to a relatively low temperature of 150°C. Moreover, even after the aforementioned long-term storage, the filling foam composition can substantially prevent reduction of the foaming ratio.
While the illustrative embodiments of the present invention are provided in the above description, such is for illustrative purpose only and it is not to be construed restrictively. Modification and variation of the present invention that will be obvious to those skilled in the art is to be covered by the following claims.

### INDUSTRIAL APPLICABILITY

The filling foam obtained by foaming the filling foam composition of the present invention is suitably used as a filling material for various industrial products such as reinforcing materials, vibration proof materials, sound insulation materials, dust control materials, heat insulators, buffers, and water proof materials.

## Claims

1. A filling foam composition comprising:
a polymer;
azodicarbonamide having an average particle size of 10 µm or less; and
a zinc compound.

2. The filling foam composition according to claim 1, further comprising an organic peroxide.

3. The filling foam composition according to claim 1, wherein the zinc compound is a fatty acid zinc formed of a fatty acid anion having 12 or more carbon atoms and a zinc cation.

4. A foam filling member comprising:
a filling foam composition containing a polymer, azodicarbonamide having an average particle size of 10 µm or less, and a zinc compound; and
a mounting member being mounted to the filling foam composition and attachable in an interior space of a hollow member.

5. A filling foam obtained by foaming a filling foam composition comprising a polymer, azodicarbonamide having an average particle size of 10 µm or less, and a zinc compound.
